# EUROPEAN PATENT SPECIFICATION

(11) **EP 0 784 564 B1**
(45) Date of publication and mention of the grant of the patent: **30.12.1998**
(21) Application number: 95904053.6
(22) Date of filing: 18.10.1994
(51) Int. Cl.: B64D 29/00

(54) **NACELLE AND MOUNTING ARRANGEMENT FOR AN AIRCRAFT ENGINE**
GONDEL UND IHRE HALTERUNGSVORRICHTUNG AUF EINEM FLUGZEUG
NACELLE ET SYSTEME DE FIXATION POUR UN MOTEUR D'AVION

(43) Date of publication of application: 23.07.1997
(73) Proprietor: UNITED TECHNOLOGIES CORPORATION, Hartford, CT 06101 (US)
(72) Inventor: BRODELL, Robert, F., Marlborough, CT 06477 (US); HOVAN, Edward, J., Manchester, CT 06040 (US); SELFORS, Steven, T., Somerville, MA 02144 (US); LOFFREDO, Constantino, V., Newington, CT 06111 (US); DUESLER, Paul, W., Manchester, CT 06040 (US)
(74) Representative: Leckey, David Herbert
(86) International application number: US9411884
(87) International publication number: WO9611843

(56) References cited:
- WO-A-93/02920
- FR-A- 2 290 350
- US-A- 5 174 525

## Description

This invention relates to aircraft propulsion systems and more particularly to a nacelle and mounting arrangement for aircraft engines.

Propulsion systems for powering modern commercial aircraft may include a high bypass ratio ducted fan engine, housed within an aerodynamically streamlined nacelle, and joined to the aircraft by an aerodynamically streamlined pylon.

The ducted fan engines used in these propulsion systems have a core section whose internal components include one or more axial flow compressors with radially extending blades rotatably driven about a longitudinal axis by one or more corresponding axial flow turbines also having radially extending blades. A core case, circular when viewed along the longitudinal axis, surrounds the compressors and turbines to form the outer flow path boundary of the core section and serve as a structural frame or backbone for the engine. Circumferentially extending blade tip seals are positioned on the inner surface of the core case radially outward of the rotating compressor and turbine blades and in close proximity thereto to ensure high efficiency.

A fan section, larger in diameter than the core section and concentric therewith, includes fan blades mounted in a hub, rotatable about the longitudinal axis and surrounded by a fan case which is circular when viewed along the longitudinal axis. A plurality of radial fan struts secures the fan case to the core case. A circumferentially extending fan tip seal is positioned on the inner surface of the fan case radially outward of the rotating fan blades and in close proximity thereto to ensure high efficiency.

The engine, as installed on an aircraft, is housed within a streamlined nacelle including an inlet, an intermediate fairing and an aft fairing. The inlet extends forward of the fan case and is firmly secured to a forward flange thereof. The intermediate fairing is a pair of access doors for maintenance access or engine removal, each door being hinged to a pylon forward extension as described more completely hereinafter. When the access doors are closed around the fan case, they latch together at their juncture so that each door encompasses approximately 180° of the fan case circumference. The aft fairing has an inner core cowl closely surrounding and substantially coextensive with the core section and an axially shorter fan duct outer wall concentric with the core cowl. The core cowl and fan duct outer wall define an annular, axially extending fan duct for conducting a fan flow stream in the axial direction. A fan duct discharge plane at the trailing edge of the fan duct defines the aft terminus of the fan duct.

A pylon, which includes an internal structural framework enclosed within an aerodynamically streamlined skin is secured to the aircraft, for example, to the lower side of an aircraft wing, and extends across the fan flow stream to mount the engine external to the main structure of the aircraft. Three sets of mount links extend between the pylon and the core case to connect the engine to the pylon. A forward link set carries vertical and lateral forces such as the engine's own weight and wind gusts acting on the core cowl. An aft link set located aft of the forward set accommodates vertical and lateral forces as well as torque reactions that accompany engine acceleration, deceleration or rotor seizure. An axial link set transmits axial forces, for example, engine thrust. All of the forces and torques acting on the nacelle or engine are carried through the mount links into the pylon structural framework to the aircraft. Accordingly, the pylon is a large, heavy component having substantial surface area exposed to the fan flow stream. A forward extension of the pylon extends axially forward beyond the interface between the intermediate fairing and the fan duct outer wall and includes the hinges for the intermediate fairing.

Among the forces imposed on the nacelle during aircraft operation is an aerodynamic force resulting from aircraft maneuvers hereinafter referred to as the nacelle aerodynamic force. The nacelle aerodynamic force is analogous to the lift force exerted on the aircraft wing and is especially sizeable during takeoff and other maneuvers involving high angles of attack or rates of change thereof. The nacelle aerodynamic force is distributed nonuniformly over the nacelle surface in both the axial and circumferential directions, but is predominant near the forward edge of the inlet at a circumferential location dependent upon aircraft orientation and wind gusts. The nacelle aerodynamic force is transmitted to the engine and is reacted at the mount links. At takeoff rotation, for example, the nacelle aerodynamic force may be directed vertically upward so that the forward mount links impose a downwardly directed reaction force on the core case while the aft mount links place an upwardly directed reaction force on the core case at a location aft of the forward links. Since the mount links restrain the engine, the associated reaction forces, acting in concert with the nacelle aerodynamic force, bend the core and fan cases relative to the longitudinal axis, an effect referred to as backbone bending. Some aircraft maneuvers may also superimpose inertial forces on the nacelle aerodynamic force with additive or offsetting effects.

The nacelle aerodynamic force also distorts the shape of the inlet, and hence the fan case, so that fan case circularity is disturbed, a condition commonly known as ovalization, although those skilled in the art understand that the distorted shape depends on the exact magnitude and distribution of the nacelle aerodynamic force.

Both ovalization and backbone bending can cause the cases to intrude on the essentially circular path followed by the fan, compressor and turbine blade tips. The resulting contact between the blade tips and the seals positioned on the inner surfaces of the cases erodes the seals with a concomitant and permanent loss of engine efficiency.

Ovalization and backbone bending can be accommodated with increased clearance between the rotating blade tips and the surrounding cases, however, this introduces an efficiency loss not unlike that associated with seal erosion.

In current generation engines, ovalization and backbone bending are mitigated by the use of stronger, and hence heavier cases and fan struts than would be required if the nacelle aerodynamic force was not present. However, the use of heavier cases and struts to mitigate ovalization and backbone bending in future generation engines will impose a significant weight penalty. Future generation engines are likely to have a higher bypass ratio (the ratio of airflow passing through the fan section to that passing through the core section), and therefore, a higher ratio of fan section diameter to core section diameter, than present generation engines. Achieving higher bypass ratio by decreasing the core section diameter renders the core case inherently less capable of resisting backbone bending. Conversely, achieving high bypass ratios by increasing fan section diameter will dramatically increase the nacelle aerodynamic force which increases with the square of fan section diameter, thereby increasing backbone bending. Thus, either method of increasing bypass ratio beyond that of present generation commercial engines (approximately five) will exacerbate backbone bending and fan case ovalization so much that mitigation of these effects by case and strut strengthening will impose an undesirable and possibly prohibitive weight increase.

Another detrimental aspect of conventional mounting arrangements is the drag created by the pylon in the fan flow stream, and particularly, in that portion of the fan flow stream downstream of the fan duct discharge plane. The fan flow is subsonic upstream of the fan duct discharge plane and supersonic downstream thereof. The drag associated with supersonic flow significantly exceeds that associated with subsonic flow for a given pylon surface area. In conventional mounting arrangements, the pylon has a large surface area, most of which is downstream of the fan duct discharge plane where its exposure to supersonic flow creates significant drag that detracts from aircraft operating efficiency.

In view of these shortcomings, an aircraft engine nacelle and mounting arrangement that isolates the engine from ovalization and backbone bending, contributes to engine efficiency retention, and minimizes engine weight and pylon drag is sought.

Examples of prior art nacelle and mounting arrangements are disclosed in FR-A-2290350, US-A-5174525 and WO 93/02920. In particular, WO 93/02920 discloses a nacelle and mounting arrangement having a core section bounded by a core case and enclosed within a core cowl, a fan section of larger diameter than the core section secured to and concentric with the core section and bounded by a fan case having a fan duct outer wall downstream thereof, the fan duct outer wall and the core cowl defining an axially extending fan duct terminating at a fan duct discharge plane for conducting a fan flow stream essentially axially, a nacelle and mounting arrangement for mounting the engine on an aircraft, comprising a pylon comprising a pylon beam, the pylon beam being secured to the aircraft external to the main structure thereof, and a nacelle united with the pylon beam.

The nacelle and mounting arrangement of the present invention is characterised over that disclosed in WO 93/02920 in that the pylon further comprises a subpylon, the subpylon mounting the engine and extending from the pylon beam across the fan flow stream; the nacelle and pylon beam defining a load path (P1) exclusive of the fan case and the core case such that when the nacelle is subjected to a nacelle aerodynamic force (F) substantially all of the force is transmitted from the nacelle directly to the pylon beam rather than from the nacelle to the pylon beam by way of the fan and core cases.

Thus according to the present invention the adverse effects of backbone bending and ovalization are significantly reduced by a unique nacelle and mounting arrangement that substantially isolates the engine from the nacelle aerodynamic force by transmitting that force directly from the nacelle to the aircraft.

At least a portion of the nacelle is united with an aircraft mounted pylon beam so that the load path for transmitting the nacelle aerodynamic force to the aircraft bypasses the engine and transfers the force directly from the nacelle to the pylon beam and the aircraft. A preferably streamlined subpylon extends across the fan flow stream to transmit most other forces, for example engine weight and thrust, from the engine to the pylon beam. In one arrangement, the nacelle and pylon beam are individual components united by a separable joint located outside the region of juncture of the pylon beam and the subpylon. Because of the separable joint, the nacelle and pylon beam can be manufactured independently if it is desirable to do so. In addition, one or more partitioning joints may be located along the length of the pylon beam if desired. Because the engine is supported from the pylon beam by the subpylon, the partitioning joint can be used to detach the engine and nacelle from the aircraft as a complete unit. In another embodiment, the nacelle and pylon beam are united by being manufactured as a one piece integral unit or manufactured to act as a one piece integral unit.

According to preferred aspects of the invention, drag is reduced by locating the pylon beam radially outward of the fan flow stream and minimizing the surface area of the subpylon exposed to the supersonic flow downstream of the fan duct discharge plane. A significant contribution to the reduction of the subpylon size is made possible by reacting engine torque at a location forward of the conventional torque reaction location.

In one detailed arrangement of the nacelle components for suspending an engine under an aircraft wing, the nacelle includes an inlet, an intermediate cowl, a fan duct outer wall and a core cowl. The intermediate cowl is axially split into upper and lower segments to facilitate engine removal. The lower segment can be an essentially 180° segment removably secured to the upper segment, or can be a pair of subsegments hinged to the upper segment. In an alternative arrangement, the nacelle includes upper and lower fan cowls, a fan duct outer wall and a core cowl. The upper and lower fan cowls are each an essentially 180° segment.

The primary advantages of the invention are the engine efficiency retention and weight savings which result from isolating the engine from the adverse effects of fan case ovalization and backbone bending rather than mitigating those effects by strengthening the cases and fan struts.

Another advantage is the drag reduction resulting from locating the pylon beam radially outward of the fan flow stream and placing the torque reaction mount links at a location that contributes to minimizing the surface area of the subpylon skin exposed to supersonic flow.

Another advantage of the present invention is the unique arrangement of nacelle components that facilitates convenient removal and replacement of the engine without subjecting nacelle component interfaces to high stresses.

A preferred embodiment of the invention will now be described, by way of example only, and with reference to the accompanying drawings in which:
Fig. 1 is a cross sectional elevation of the nacelle and mounting arrangement of the present invention as applied to a high bypass ratio ducted fan engine suspended under the wing of an aircraft;
Fig. 2 is a fragmentary perspective view of the nacelle and mounting arrangement of the present invention showing additional details;
Fig. 3 is a perspective view showing one arrangement of the nacelle components of the present invention;
Fig. 4 is a fragmentary perspective view illustrating an alternative interface between the lower and upper intermediate cowl segments of Fig. 3;
Fig. 5 is a perspective view of the upper and lower intermediate cowl segments of Fig. 3-illustrating an alternative arrangement of the lower intermediate cowl segment;
Fig. 6 is a perspective view showing an alternative arrangement of the nacelle components of the present invention; and
Fig. 7 is a cross sectional elevation of a prior art nacelle and mounting arrangement for a high bypass ratio ducted fan engine.

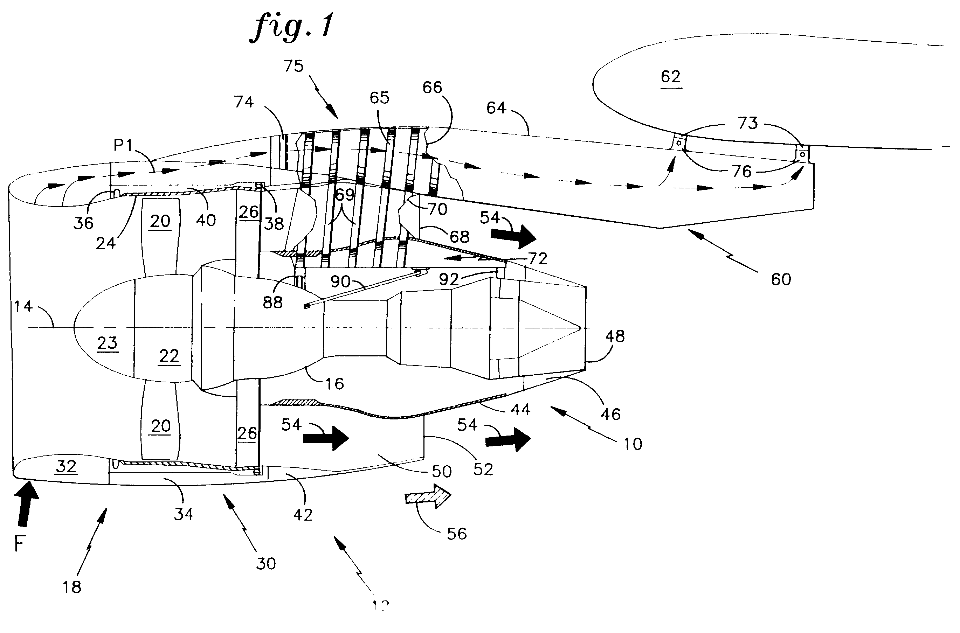

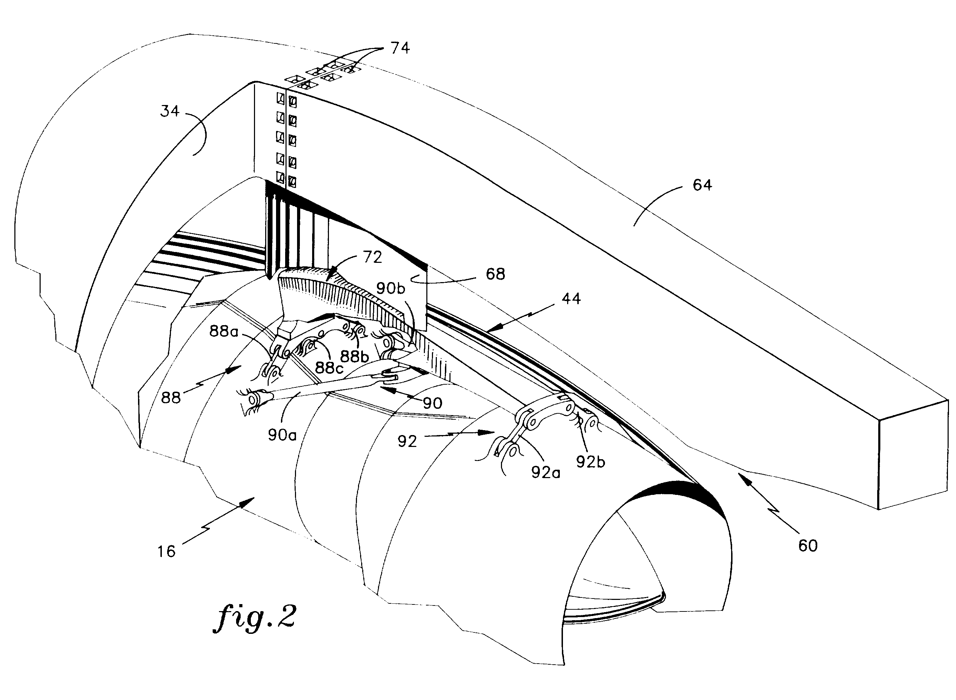

Referring to Figs. 1 and 2, a high bypass ratio ducted fan aircraft engine 10 includes a core section 12 whose internal components (not shown) include one or more bladed axial flow compressors, driven by corresponding bladed axial flow turbines rotating about a longitudinal axis 14. A core case 16, essentially circular in cross section when viewed along the axis at any axial location, forms the outer flow path boundary of the core section and serves as a structural frame or backbone of the engine. Circumferentially extending blade tip seals (not shown) are positioned on the inner surface of the core case radially outward of the rotating compressor and turbine blades and in close proximity thereto to ensure high engine efficiency.

A fan section 18, larger in diameter than the core section and concentric therewith, includes fan blades 20 mounted in a hub 22 whose forward facing surface is covered by a streamlined nose dome 23. The hub and fan blades are rotatable about the longitudinal axis and are surrounded by a fan case 24 which forms the outer flow path boundary of the fan section. The fan case is essentially circular in cross section when viewed along the engine axis at any axial location. A plurality of radially extending fan struts 26 secure the fan case to the core case. Circumferentially extending blade tip seals (not shown) are positioned on the inner surface of the fan case radially outward of the rotating compressor and turbine blades and in close proximity thereto to ensure high engine efficiency.

The engine, as installed on an aircraft, is housed within an aerodynamically streamlined nacelle 30. The nacelle includes an inlet 32 forward of the fan case, secured to an intermediate cowl 34 which surrounds and is substantially coextensive with the fan case 24. Circumferentially extending flexible seals, such as an arching band 36 or an elastomeric ring 38, span between and cooperate with the fan case and the intermediate cowl to define an annular cavity 40 which accommodates deflection of the nacelle relative to the fan case. The nacelle also includes a fan duct outer wall 42 aft of the intermediate cowl and secured thereto, and a core cowl 44 enclosing the core section. A core exhaust nozzle 46 extends axially from the core case and ends at a core discharge plane 48. The fan duct outer wall and the core cowl cooperate to define an axially extending annular fan duct 50 terminating at a fan duct discharge plane 52 upstream of the core discharge plane 48. A fan flow stream 54 is conducted axially through the fan duct and is discharged at the fan duct discharge plane, downstream of which it may be redirected by free stream flow 56 so that the fan flow stream proceeds with a slight radially inward velocity component as well as an axial component.

The engine is mounted on the aircraft, external to the main aircraft structure, by a pylon 60 extending between the engine and, for example, an aircraft wing 62. The pylon includes a pylon beam 64 with an internal structural framework 65 enclosed within a skin 66, a subpylon 68 also having an internal framework 69 enclosed within a skin 70, and an engine mount beam 72. Wing mount fittings 73 on the aircraft wing and pylon-to-aircraft mount fittings 76 on the pylon beam are used to secure the pylon to the wing. The pylon is united with the intermediate cowl 34 by a separable joint such as the bolted joint 74 located longitudinally outside the region of juncture 75 of the subpylon with the pylon beam. In addition, one or more additional separable partitioning joints may be located along the pylon beam outside the region of juncture with the subpylon for separating the pylon beam into distinct modules, for example, to establish an interface between hardware supplied by the engine manufacturer and the aircraft manufacturer. The pylon beam and the intermediate cowl can also be manufactured as a one piece integral unit or can be made of individual components united by essentially inseparable joints, for example, welded joints, to act as an integral unit.

The subpylon 68 extends from the pylon beam, across the fan flow stream 54 and terminates in the engine mount beam 72 radially inward of the core cowl 44. As shown best in Fig. 2, three sets of mount links 88, 90 and 92 extend between the engine mount beam and the engine case to mount the engine to the pylon and transmit forces from the engine to the pylon. Aft mount link set 92 includes two mount links 92a, 92b each of which transmits vertical and lateral forces, for example the engine's own weight and wind gusts acting on the core cowl. Forward mount link set 88 includes three links 88a, 88b, 88c, two of which (88a and 88b) are analogous to the two vertical and lateral force reacting links in set 92, and the third of which (88c) carries the torque reaction that accompanies acceleration, deceleration or seizure of the rotating compressors and turbines. An axial mount link set 90 includes two mount links 90a, 90b to transmit axial forces such as engine thrust. The links within sets 88 and 92 are capable of limited motion in a plane approximately perpendicular to the longitudinal axis 14 and the thrust links 90 are capable of limited motion in the lateral and vertical directions. The construction and configuration of the mount links are conventional, however, as explained in greater detail hereinafter, the placement of the torque reacting link set forward of the link set that reacts only vertical and lateral forces is a preferred feature of the present invention. Preferably, the engine's center of gravity, the forward mount link set, and at least a portion of the subpylon structural framework are approximately axially coincident. The axial coincidence ensures a generally linear load path from the engine case to the pylon beam which minimizes bending stresses on the subpylon and engine mount beam.

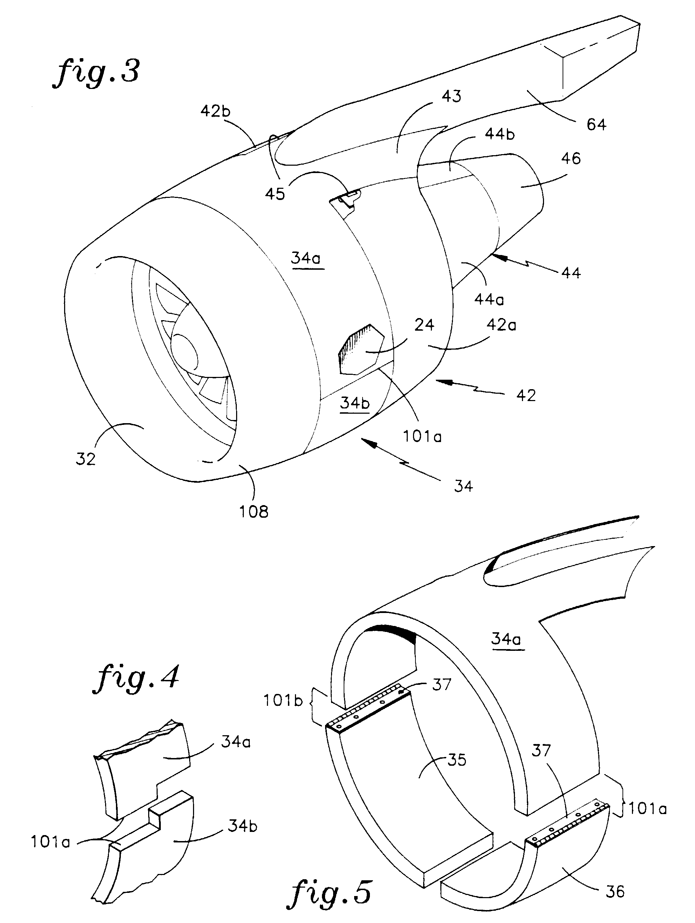

Further details of the arrangement of nacelle components are illustrated in Figs. 3, 4 and 5. The exact means by which the various components are joined together (e.g., bolts or hinges) are typically not visible and are not embraced by the present invention and, therefore, are not depicted in the Figures. The intermediate cowl 34, which completely surrounds the circumference of the fan case, includes upper and lower intermediate cowl segments 34a and 34b, each segment extending over approximately 180° of the fan case circumference and separably joined by bolts and nuts along essentially axial interfaces 101a, 101b. The nacelle also includes the circumferentially continuous inlet 32 forward of the intermediate cowl. The inlet is secured to the upper intermediate cowl segment by mechanical fasteners such as nuts and bolts and has a circumferentially extending groove that mates with a corresponding knife edge on the lower intermediate cowl segment to secure the lower portion of the inlet to the lower intermediate cowl segment. The fan duct outer wall 42 includes both left and right outer walls 42a, 42b each of which is secured by a hinged joint 45 to a corresponding hinge beam portion 43 of the upper intermediate cowl segment. The core cowl 44, comprises left and right core cowls 44a, 44b each of which is connected to the engine mount beam by hinges internal to the core cowl. The core exhaust nozzle 46 is bolted to a flange on the core case.

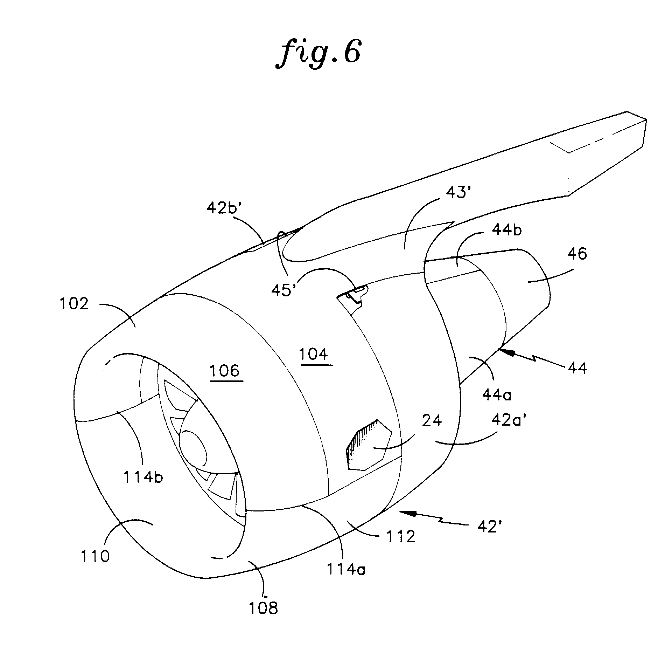

As shown in Fig. 4, and as discussed in more detail hereinafter, the upper and lower intermediate cowl segments may extend slightly more or less than 180° over at least a portion of their axial length if necessary to accommodate engine removal and subsequent transport in the longitudinal direction, provided that the assembled segments completely circumscribe the fan case. As shown in Fig. 5, the lower intermediate cowl segment 34b may comprise subsegments 35, 36 joined by hinges 37 to the upper segment along the interfaces 101a, 101b and which, when closed, latch together to enclose the fan case.

An alternative nacelle component arrangement is shown in Fig. 6. The nacelle includes an upper fan cowl 102 having an upper fan case cowl 104 substantially coextensive with the fan case 24 and extending circumferentially approximately 180°. The upper fan cowl also includes an inlet segment 106 forward of and circumferentially coextensive with the upper fan case cowl and secured thereto by mechanical fasteners such as bolts and nuts. The nacelle also includes a lower fan cowl 108 having an inlet portion 110 integral with a lower fan case cowl portion 112. The lower fan cowl 108 is separably joined with bolts and nuts to the upper fan cowl 102 along essentially axial interfaces 114a, 114b. The fan duct outer wall 42' includes both left and right outer walls 42a', 42b' each of which is secured by a hinged joint 45' to a corresponding hinge beam portion 43' of the upper fan case cowl 104. The core cowl 44, comprises left and right core cowls 44a, 44b each of which is connected to the engine mount beam by hinges internal to the core cowl. The core exhaust nozzle 46 is bolted to a flange on the core case.

The nacelle of the present invention is used with engines mounted external to the main structure of the aircraft. Examples of externally mounted engines include those suspended under an aircraft wing or cantilevered laterally from the fuselage. By contrast, internally mounted engines are exemplified by those located within the fuselage structure, as is common in military fighter aircraft, or mounted within the tail structure of some commercial airliners.

During aircraft maneuvers the nacelle may experience a nacelle aerodynamic force distributed nonuniformly over the nacelle surface both axially and circumferentially. Because the nacelle of an externally mounted engine is not directly supported by the aircraft structure, which would be capable of absorbing forces acting on the nacelle, the nacelle aerodynamic force can significantly deflect and distort the nacelle. For example, referring again to Fig. 1, the nacelle may experience an essentially upwardly directed nacelle aerodynamic force F during takeoff. The nacelle may deflect and ovalize so that over a portion of its circumference, the nacelle deflects radially inward, however, cavity 40 precludes contact and, therefore, force transmittal between the nacelle and the fan case. The flexible seals 36, 38 deflect to accommodate the deflection of the nacelle relative to the fan case without conveying any significant force into the fan case. Instead, the force is transmitted around the circumference of the nacelle and then directly from the nacelle to the pylon beam and the aircraft along load path P1, effectively isolating the engine from the case ovalizing and backbone bending influences of force F. Forces other than the nacelle aerodynamic force, such as engine weight, engine thrust and lateral wind gusts, that do not contribute to ovalization and backbone bending are transmitted through the mount links sets 88, 90, 92 to the engine beam, subpylon and pylon beam.

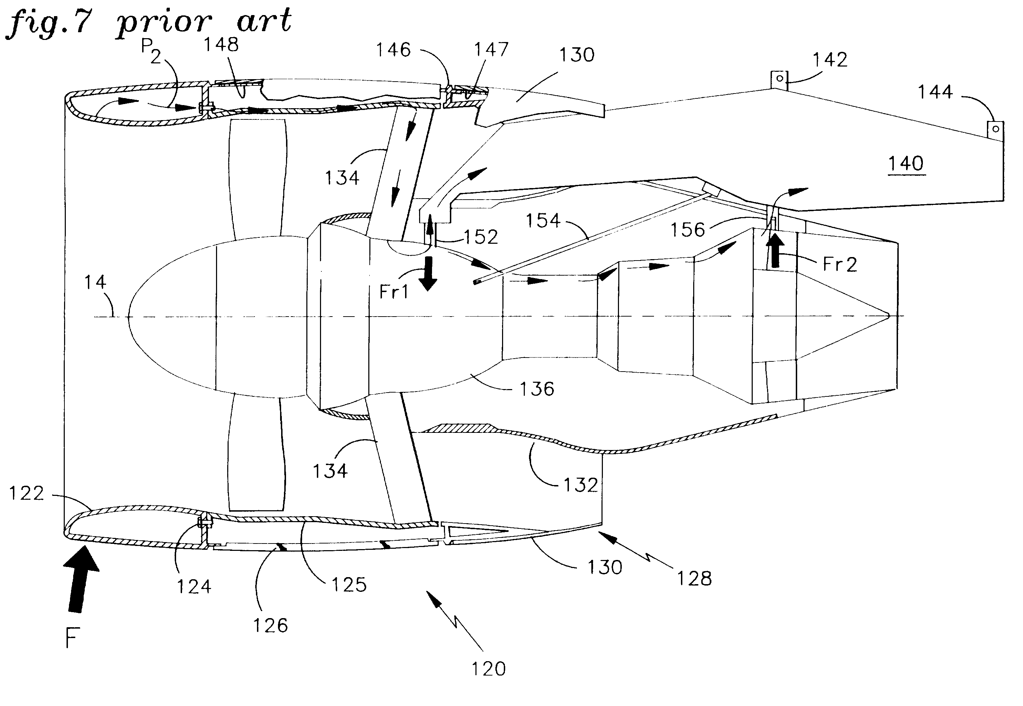

The above described operation is better appreciated when contrasted with that of a conventional nacelle and mounting system shown in Fig. 7. In the conventional arrangement, a nacelle 120 includes an inlet 122 firmly secured, as by a bolted joint 124 to the fan case 125, an intermediate fairing 126 which is a pair of essentially 180° access doors connected by hinges 148 to a forward extension 146 of the pylon 140, and an aft fairing 128 including two essentially 180° fan duct outer walls 130, each connected by hinges 147 to the pylon beam extension 146, and an inner core cowl 132. A plurality of fan struts, as represented by struts 134, extend generally radially to connect the fan case 125 to the core case 136. Three sets of mount links 152, 154, 156 connect the engine to the pylon 140 which itself is attached to the aircraft at pylon-to-aircraft mount fittings 142, 144. Forward mount link set 152 is a set of two links that transmit vertical and lateral forces, axial mount link set 154 is a set of two links that transmit axial forces, and aft mount link set 156 is a set of three links located aft of the forward link set to transmit vertical forces, lateral forces and torque.

The nacelle aerodynamic force F ovalizes the inlet 122 and, due to the rigid joint 124 between the inlet and the fan case 125, ovalizes the fan case as well, causing the fan case to contact the fan blade tip, thereby eroding the blade tip seals (not shown) on the inner surface of the fan case radially outward of the blade tips. The force F is also transmitted around the circumference of the nacelle and along load path P2, illustrated by broken lines, from the inlet to the fan case and then through the fan struts to the core case where it is reacted at the forward and aft mount link sets. The reaction forces Frl and Fr2 exerted by the mount links on the engine case act in concert with force F to bend the cases and cause the adverse effects previously described. Furthermore, because all of the forces and torques acting on the engine or nacelle are transferred to the pylon, the pylon is a relatively large component having substantial surface area exposed to the supersonic fan flow stream downstream of the fan duct discharge plane. Consequently, the pylon creates significant drag which degrades the aerodynamic efficiency of the aircraft.

Referring again to Figs. 1 and 2, further features and advantages of the preferred embodiment can now be appreciated in light of the foregoing discussion. The pylon beam 64 of the present invention must withstand all of the forces and torques acting on the engine. However, the nacelle aerodynamic force F is conveyed directly to the pylon beam from the nacelle, thereby bypassing the engine cases so that the large, bulky pylon beam need not extend across the fan flow stream 54. Instead, the pylon beam is located radially outward of the fan flow stream and only the subpylon 68, which does not transmit nacelle aerodynamic forces and, therefore, is smaller than the pylon of conventional mount systems, extends across the fan flow stream. Thus, the direct transfer of nacelle aerodynamic forces from the nacelle to the pylon beam contributes to drag reduction by minimizing the surface area of components exposed to the fan flow stream, and particularly to the supersonic flow downstream of the fan duct discharge plane.

Minimization of the subpylon size is facilitated in the preferred embodiment by locating the torque reacting link set 88 forward of the link set 92 that reacts only vertical and lateral forces. Regardless of where the torque reacting link set is located, the torque reaction must be conveyed to the pylon beam through the subpylon. If torque were reacted at the aft link set (as is conventional) a structural framework corresponding to the subpylon would have to cross the fan flow stream downstream of the fan duct discharge plane to transmit the torque reaction vertically to the pylon beam. A streamlined skin, or an extension of the subpylon skin 70 would have to enclose the structural framework, creating additional drag and possibly negating the drag reduction benefit obtained by locating the pylon beam radially outward of the fan flow stream. Another way to transfer torque from the aft link set to the pylon beam would be to transfer it forward through the engine mount beam 72 and then through the subpylon structural framework 69. While this latter approach would possibly reduce the subpylon size, it would also require additional engine mount beam weight to accept the torque reaction along the beam's entire axial length. By reacting torque at the forward link set, the invention in its preferred embodiment takes advantage of the most practical positioning of the subpylon (approximately axially coincident with the engine center of gravity and the forward mount link set) to minimize the subpylon surface area exposed to the fan flow stream without increasing engine mount beam weight. Most preferably, the subpylon is small enough to be positioned entirely within the fan duct 50 where it is exposed only to subsonic flow, and the engine mount beam is located inboard of the core cowl 44 where it too is isolated from the fan flow stream.

Another feature of the preferred embodiment is the placement of nacelle component interfaces at a circumferential location that facilitates convenient engine removal while minimizing stress on the interfaces. Referring to Fig. 3, the upper and lower intermediate cowl segments 34a, 34b are approximately 180° sectors so that the interfaces therebetween, 101a and 101b (visible in Fig. 5), are each offset approximately 90° from the top of the engine. Aerodynamic forces acting on the lower intermediate cowl segment 34b are transmitted around the circumference of the intermediate cowl 34 and impose stress on the axially extending interfaces. The stress increases as the circumferential distance from the point of force application (near the bottom of the intermediate cowl) increases and, for this reason, it is desirable to locate the interfaces as close to the bottom of the intermediate cowl as possible. It is also necessary that an approximately 180° sector be made available for engine removal when the lower intermediate cowl segment is detached from the upper segment. Because the upper and lower intermediate cowl segments of the preferred embodiment are each approximately 180°, both the requirement for engine removal and the requirement for minimizing stress on the axially extending interfaces are satisfied. Likewise, the 180° extent of the upper fan cowl 102, and lower fan cowl 108 of the alternative arrangement (Fig. 6) provides the same benefits.

Engine removal is accomplished by separating the lower intermediate cowl segment 34b from the upper intermediate cowl segment 34a and inlet 32, opening or removing the fan duct outer wall 42 and the core cowl 44, removing the nose dome 23 (Fig. 1), and disconnecting the mount links. Removal of the lower intermediate cowl segment opens an approximately 180° sector through which the engine is removed. Depending on the amount of radial clearance between the inner surface of the nacelle and the engine cases (or components mounted thereon) a sector slightly less or more than 180° may suffice. Because the inlet 32 extends 360°, a wing mounted engine, once lowered from the aircraft, must be transported rearward. As shown in Fig. 4, slight deviations in sector circumferential extent can be incorporated along at least a portion of the axial length of the sectors if desirable. For aircraft where transport to the rear is blocked by components or structure protruding from the aircraft, the alternative arrangement of Fig. 6 can be used. This alternative arrangement, like that of Fig. 3, isolates the engine from the nacelle aerodynamic force, provides an approximately 180° nacelle sector which can be opened for engine removal, and places the interface between the upper fan cowl 102 and the lower fan cowl 108 in a lightly stressed region of the nacelle. Engine removal is accomplished by detaching the lower fan cowl 108 from the upper fan cowl 102 and proceeding as described above. Once lowered, the engine can be transported forward.

The nacelle and mounting arrangement of the present invention has been described as particularly applicable to ducted fan engines having a bypass ratio greater than 5, and the best mode for carrying out the invention was illustrated in the context of an engine suspended under an aircraft wing. However, the invention is also applicable to engines having a bypass ratio of 5 or less, as well as those mounted in other orientations and from other locations outside the main structure of the aircraft.

## Claims

1. A nacelle and mounting arrangement for mounting an aircraft ducted fan engine (10) on an aircraft, said engine having a core section (12) bounded by a core case (16) and enclosed within a core cowl (44), a fan section (18) of larger diameter than the core section secured to and concentric with said core section and bounded by a fan case (24) having a fan duct outer wall (42) downstream thereof, said fan duct outer wall and said core cowl defining an axially extending fan duct (50) terminating at a fan duct discharge plane (52) for conducting a fan flow stream (54) essentially axially, said nacelle and mounting arrangement comprising
a pylon (60) comprising a pylon beam (64), the pylon beam (64) being secured to said aircraft external to the main structure thereof, and a nacelle (30) united with said pylon beam (64);
characterised in that the pylon (60) further comprises a subpylon (68), said subpylon (68) mounting said engine (10) and extending from said pylon beam across said fan flow stream;
the nacelle (30) and pylon beam (64) defining a load path (P1) exclusive of said fan case and said core case such that when said nacelle is subjected to a nacelle aerodynamic force (F) substantially all of said force is transmitted from said nacelle directly to said pylon beam rather than from said nacelle to said pylon beam by way of said fan and core cases.

2. The nacelle and mounting arrangement of claim 1 characterised by a pair of circumferentially extending flexible seals (36, 38) spanning between said nacelle (30) and said fan case (24) for accommodating deflection of said nacelle relative to said fan case without conveying a significant portion of said nacelle aerodynamic force into said fan case.

3. The nacelle and mounting arrangement of claim 1 or 2, characterized by said subpylon (68) terminating in an engine mount beam (72) radially inwardly of said core cowl (44), said engine mount beam being connected to at least an aft link set (92) which transmits vertical and lateral forces from said engine to said engine mount beam (72) and a forward link set (88) which transmits vertical forces, lateral forces and torque reactions from said engine to said mount beam.

4. The nacelle and mounting arrangement of any preceding claim characterized in that said subpylon (68) is disposed entirely within said fan duct (50) forward of said fan duct discharge plane (52).

5. The nacelle and mounting arrangement of any preceding claim characterized in that said pylon beam (64) is located radially outwardly of said fan flow stream (54).

6. The nacelle and mounting arrangement of any preceding claim characterized in that said pylon beam (64) and said nacelle (30) are united by a separable joint (74) longitudinally outside the region of juncture (75) of said pylon beam (64) and said subpylon (68).

7. The nacelle and mounting arrangement of any of claims 1 to 5, characterized in that said pylon beam (64) and said nacelle (30) are integral.

8. The nacelle and mounting arrangement of claim 3 characterized in that said pylon beam (64) comprises at least two modules separably joined together at a partitioning joint outside the region of juncture (75) of said pylon beam (64) and said subpylon (68).

9. The nacelle and mounting arrangement of any preceding claim said nacelle characterized by:
an intermediate cowl (34) comprising upper and lower intermediate cowl segments (34a, 34b) each segment extending circumferentially approximately 180° around said fan case (24) and separably joined along an essentially axial interface; and
a circumferentially continuous inlet (32) forward of and secured to said intermediate cowl (34).

10. The nacelle and mounting arrangement of claim 9 characterized in that said lower intermediate cowl segment (34b) further comprises two subsegments (35, 36) each hinged (37) to said upper intermediate nacelle segment (34a).

11. The nacelle and mounting arrangement of any of claims 1 to 8, said nacelle characterized by:
an upper fan cowl (102) comprising an upper fan case cowl (104) substantially coextensive with said fan case (24) and extending circumferentially approximately 180° and an inlet segment (106) forward of and secured to said upper fan case cowl and circumferentially coextensive therewith; and
a lower fan cowl (108) extending approximately 180° having an inlet portion (110) and a lower fan case cowl portion (112) integral with said inlet portion, said upper fan cowl (102) and said lower fan cowl (108) separably joined along an essentially axial interface (114a, 114b).

## Patentansprüche

1. Gondel- und Befestigungsanordnung zum Befestigen eines Flugzeugtriebwerks (10) mit ummanteltem Bläser an einem Flugzeug, wobei das Triebwerk einen Kernabschnitt (12), der von einem Kerngehäuse (16) begrenzt ist und von einer Kernverkleidung (44) umgeben ist, und einen Bläserabschnitt (18) mit einem größeren Durchmesser als der Kernabschnitt, der an dem Kernabschnitt befestigt ist und konzentrisch zu diesem ist und von einem Bläsergehäuse (24) mit einer Bläsermantel-Außenwand (42) strömungsabwärts davon begrenzt wird, wobei die Bläsermantel-Außenwand und die Kernverkleidung einen sich axial erstreckenden Bläserkanal (50) definieren, der an einer Bläserkanal-Abgabeebene (52) endet, zum im wesentlichen axial Hindurchleiten einer Bläserfließströmung (54), wobei die Gondel- und Befestigungsanordnung aufweist:
einen Pylon (60), der einen Pylonträger (64) aufweist, wobei der Pylonträger (64) an dem Flugzeug extern von dessen Hauptstruktur befestigt ist, und eine Gondel (30), die mit dem Pylonträger (64) vereinigt ist;
dadurch gekennzeichnet,
daß der Pylon (60) ferner einen Unterpylon (68) aufweist, wobei der Unterpylon (68) das Triebwerk (10) befestigt und sich von dem Pylonträger über die Bläserfließströmung erstreckt;
wobei die Gondel (30) und der Pylonträger (64) einen Lastpfad (P1) ohne das Bläsergehäuse und das Kerngehäuse so definieren, daß wenn die Gondel einer aerodynamischen Gondelkraft (F) ausgesetzt ist, im wesentlichen die ganze Kraft von der Gondel direkt zu dem Pylonträger, statt von der Gondel über das Bläsergehäuse und das Kerngehäuse, übertragen wird.

2. Gondel- und Befestigungsanordnung nach Anspruch 1, gekennzeichnet durch ein Paar von sich umfangsmäßig erstreckenden flexiblen Dichtungen (36, 38), die sich zwischen der Gondel (30) und dem Bläsergehäuse (24) zum Aufnehmen von Verformung der Gondel relativ zu dem Bläsergehäuse, ohne einen bedeutenden Anteil der aerodynamischen Gondelkraft in das Bläsergehäuse einzuleiten, erstrecken.

3. Gondel- und Befestigungsanordnung nach Anspruch 1 oder 2, dadurch gekennzeichnet, daß der Unterpylon (68) in einem Triebwerksbefestigungsträger (72) radial innerhalb von der Kernverkleidung (44) endet, wobei der Triebwerksbefestigungsträger mit mindestens einem hinteren Verbindungselementesatz (92), der Vertikal- und Lateralkräfte von dem Triebwerk auf den Triebwerksbefestigungsträger (72) überträgt, und einem vorderen Verbindungselementesatz (88) verbunden ist, der Vertikalkräfte, Lateralkräfte und Drehmomentreaktionen von dem Triebwerk auf den Befestigungsträger überträgt.

4. Gondel- und Befestigungsanordnung nach einem der vorangehenden Ansprüche, dadurch gekennzeichnet, daß der Unterpylon (68) vollständig in dem Bläserkanal (50) vor der Bläserkanalabgabgeebene (52) angeordnet ist.

5. Gondel- und Befestigungsanordnung nach einem der vorangehenden Ansprüche, dadurch gekennzeichnet, daß der Pylonträger (64) radial außerhalb der Bläserfließströmung (54) angeordnet ist.

6. Gondel- und Befestigungsanordnung nach einem der vorangehenden Ansprüche, dadurch gekennzeichnet, daß der Pylonträger (64) und die Gondel (30) von einer lösbaren Verbindung (74) in Längsrichtung außerhalb des Bereichs der Verbindung (75) des Pylonträgers (64) und des Unterpylons (68) vereinigt sind.

7. Gondel- und Befestigungsanordnung nach einem der Ansprüche 1 bis 5, dadurch gekennzeichnet, daß der Pylonträger (64) und die Gondel (30) integral sind.

8. Gondel- und Befestigungsanordnung nach Anspruch 3, dadurch gekennzeichnet, daß der Pylonträger (64) mindestens zwei Module aufweist, die an einer Trennstelle außerhalb des Bereichs der Verbindung (75) des Pylonträgers (64) und des Unterpylons (68) lösbar miteinander verbunden sind.

9. Gondel- und Befestigungsanordnung nach einem der vorangehenden Ansprüche, wobei die Gondel gekennzeichnet ist durch
eine Zwischenverkleidung (34), die ein oberes und ein unteres Zwischenverkleidungssegment (34a, 34b) aufweist, wobei sich jedes Segment umfangsmäßig um annähern 180° um das Bläsergehäuse (24) erstreckt und die Segmente lösbar entlang einer im wesentlichen axialen Übergangsstelle lösbar verbunden sind; und
einen umfangsmäßig kontinuierlichen Einlaß (32), der vor der Zwischenverkleidung (34) ist und an dieser befestigt ist.

10. Gondel- und Befestigungsanordnung nach Anspruch 9, dadurch gekennzeichnet, daß das untere Zwischenverkleidungssegment (34b) ferner zwei Untersegemente (35, 36) aufweist, die jeweils drehbar an dem oberen Zwischengondelsegment (34a) angeschlagen (37) sind.

11. Gondel- und Befestigungsanordnung nach einem der Ansprüche 1 bis 8, wobei die Gondel gekennzeichnet ist durch
eine obere Bläserverkleidung (102), die eine obere Bläsergehäuseverkleidung (104), die sich im wesentlichen gemeinsam mit dem Bläsergehäuse (24) erstreckt und sich umfangsmäßig etwa um 180° erstreckt, und ein Einlaßsegment (106) aufweist, das vor der oberen Bläsergehäuseverkleidung ist, an dieser befestigt ist und sich umfangsmäßig zusammen mit dieser erstreckt; und
eine untere Bläserverkleidung (108), die sich im wesentlichen um 180° erstreckt, mit einem Einlaßbereich (110) und einem unteren Bläsergehäuseverkleidungsbereich (112), der mit dem Einlaßbereich integral ist, wobei die obere Bläserverkleidung (102) und die untere Bläserverkleidung (108) lösbar entlang einer im wesentlichen axialen Übergangsstelle (114a, 114b) verbunden sind.

## Revendications

1. Nacelle et dispositif de montage pour monter un moteur d'avion à soufflante carénée (10) sur un avion, ledit moteur comportant une partie formant générateur de gaz (12) délimitée par un carter de générateur de gaz (16) et enfermée à l'intérieur d'un capot de générateur de gaz (44), une partie formant soufflante (18) de plus grand diamètre que la partie formant générateur de gaz, fixée à ladite partie formant générateur de gaz et concentrique avec elle et délimitée par un carter de soufflante (24) comportant une paroi extérieure de canal de soufflante (42) en aval de celle-ci, ladite paroi extérieure de canal de soufflante et ledit capot de générateur de gaz définissant un canal de soufflante s'étendant axialement (50) qui se termine au niveau d'un plan de décharge de canal de soufflante (52) servant à guider un écoulement issu de la soufflante (54) essentiellement axialement, lesdits nacelle et dispositif de montage comprenant
un pylône (60) comprenant une poutre de pylône (64), la poutre de pylône (64) étant fixée audit avion à l'extérieur de sa structure principale, et une nacelle (30) unie à ladite poutre de pylône (64) ;
caractérisés en ce que le pylône (60) comprend en outre un pylône secondaire (68), ledit pylône secondaire (68) supportant ledit moteur (10) et s'étendant de ladite poutre de pylône à travers ledit écoulement issu de la soufflante ;
la nacelle (30) et la poutre de pylône (64) définissant un chemin de charge (P1) excluant ledit carter de soufflante et ledit carter de générateur de gaz, de sorte que, lorsque ladite nacelle est soumise à une force aérodynamique de nacelle (F), sensiblement la totalité de ladite force est transmise de ladite nacelle directement à ladite poutre de pylône plutôt que de ladite nacelle à ladite poutre de pylône par l'intermédiaire desdits carters de soufflante et de générateur de gaz.

2. Nacelle et dispositif de montage selon la revendication 1, caractérisés par deux garnitures souples s'étendant circonférentiellement (36, 38) faisant la liaison entre ladite nacelle (30) et ledit carter de soufflante (24) et servant à autoriser toute flexion de ladite nacelle par rapport audit carter de soufflante sans véhiculer une partie significative de ladite force aérodynamique de nacelle à l'intérieur dudit carter de soufflante.

3. Nacelle et dispositif de montage selon la revendication 1 ou 2, caractérisés par ledit pylône secondaire (68) se terminant dans une poutre de montage de moteur (72) radialement à l'intérieur dudit capot de générateur de gaz (44), ladite poutre de montage de moteur étant reliée à au moins un jeu de barres de liaison arrière (92) qui transmet des forces verticales et latérales dudit moteur à ladite poutre de montage de moteur (72) et un jeu de barres de liaison avant (88) qui transmet des forces verticales, des forces latérales et des réactions de moment de torsion dudit moteur à ladite poutre de montage.

4. Nacelle et dispositif de montage selon l'une quelconque des revendications précédentes, caractérisés en ce que ledit pylône secondaire (68) est disposé entièrement à l'intérieur dudit canal de soufflante (50) à l'avant dudit plan de décharge de canal de soufflante (52).

5. Nacelle et dispositif de montage selon l'une quelconque des revendications précédentes, caractérisés en ce que ladite poutre de pylône (64) est située radialement à l'extérieur dudit écoulement issu de la soufflante (54).

6. Nacelle et dispositif de montage selon l'une quelconque des revendications précédentes, caractérisés en ce que ladite poutre de pylône (64) et ladite nacelle (30) sont unies par un raccord séparable (74) longitudinalement à l'extérieur de la zone de jointure (75) de ladite poutre de pylône (64) et dudit pylône secondaire (68).

7. Nacelle et dispositif de montage selon l'une quelconque des revendications 1 à 5, caractérisés en ce que ladite poutre de pylône (64) et ladite nacelle (30) sont d'un seul tenant.

8. Nacelle et dispositif de montage selon la revendication 3, caractérisés en ce que ladite poutre de pylône (64) comprend au moins deux modules assemblés l'un à l'autre de façon séparable au niveau d'un raccord de séparation à l'extérieur de la zone de jointure (75) de ladite poutre de pylône (64) et dudit pylône secondaire (68).

9. Nacelle et dispositif de montage selon l'une quelconque des revendications précédentes, ladite nacelle étant caractérisée par :
un capot intermédiaire (34) comprenant des segments de capot intermédiaire supérieur et inférieur (34a, 34b), chaque segment s'étendant circonférentiellement approximativement sur 180° autour dudit carter de soufflante (24) et étant assemblé de façon séparable le long d'une interface essentiellement axiale ; et
une entrée circonférentiellement continue (32) à l'avant dudit capot intermédiaire (34) et fixée à celui-ci.

10. Nacelle et dispositif de montage selon la revendication 9, caractérisés en ce que ledit segment de capot intermédiaire inférieur (34b) comprend en outre deux segments secondaires (35, 36), chacun étant articulé (37) audit segment de nacelle intermédiaire supérieur (34a).

11. Nacelle et dispositif de montage selon l'une quelconque des revendications 1 à 8, ladite nacelle étant caractérisée par :
un capot de soufflante supérieur (102) comprenant un capot de carter de soufflante supérieur (104) sensiblement de même étendue que ledit carter de soufflante (24) et s'étendant circonférentiellement approximativement sur 180°, et un segment d'entrée (106) à l'avant dudit capot de carter de soufflante supérieur, fixé à celui-ci et de même étendue circonférentielle que celui-ci ; et
un capot de soufflante inférieur (108) s'étendant approximativement sur 180°, comportant une partie d'entrée (110) et une partie formant capot de carter de soufflante inférieur (112) d'un seul tenant avec ladite partie d'entrée, ledit capot de soufflante supérieur (102) et ledit capot de soufflante inférieur (108) étant assemblés de façon séparable le long d'une interface essentiellement axiale (114a, 114b).
